# EUROPEAN PATENT APPLICATION

(11) **EP 1 209 124 A1**
(43) Date of publication of application: **29.05.2002**
(21) Application number: 01128147.4
(22) Date of filing: 27.11.2001
(51) Int. Cl.: C01G 45/00, C01G 51/00

(54) **Lamellar sodium-cobalt-manganese oxide and method for manufacturing the same**

(30) Priority: 27.11.2000 JP 2000359060
(71) Applicant: National Institute for Materials Science, Tsukuba-shi, Ibaraki 305-0047 (JP); Japan Storage Battery Co., Ltd., Kyoto-shi, Kyoto 601-8520 (JP); Toda Kogyo Corporation, Hiroshima-shi, Hiroshima-ken 730-0847 (JP)
(72) Inventor: Takada, Kazunori, Nat. Inst. for Materials Science, Tsukuba-shi, Ibaraki 305-0047 (JP); Kondo, Shigeo, Nat.Institute for Materials Science, Tsukuba-shi, Ibaraki 305-0047 (JP); Watanabe, Mamoru, Nat. Inst. for Materials Science, Tsukuba-shi, Ibaraki 305-0047 (JP); Kouguchi, Masaru, c/o Japan Storage Battery Co.Ltd, Kyoto 601-8520 (JP); Kajiyama, Akihisa, c/o Toda Kogyo Corporation, Otake-shi, Hiroshima-ken 739-0652 (JP); Inada, Taro, Denki Kagaku Kogyo Kabushiki Kaisha, Machida-shi, Tokyo 194-8560 (JP)
(74) Representative: VOSSIUS & PARTNER

(57) **Abstract**

A lamellar sodium-cobalt-manganese oxide represented by the general formula NaₓCo_{y}Mn_{1-y}O₂ (where 0.6≦x ≦0.8, 0.4 ≦y ≦0.6) is disclosed, which is obtained by the steps of: mixing a sodium salt, a cobalt salt and a manganese salt in an aqueous solution state so as to be a molar ratio of sodium, cobalt and manganese of x: y: 1-y (where 0.6 ≦x ≦0.8, 0.4 ≦y ≦0.6) and drying the obtained mixture, sintering the obtained dried body in an oxygen-containing gas at 700 to 900 °C, and quenching the sintered body from a temperature between 700 °C and 800 °C. The lamellar sodium-cobalt manganese oxide of the present invention has a uniform composition and a single crystal structure, which is useful as an electrode active material for a lithium ion secondary battery.

## Description

The present invention relates to a lamellar sodium-cobalt-manganese oxide and a method for manufacturing the same, and more specifically to a lamellar sodium-cobalt-manganese oxide having a uniform composition and single crystal structure, which is useful as an electrode active material for a lithium ion secondary battery, and a method for manufacturing it easily.

NaCoO₂ is large in thermal electromotive force and low in resistance and heat conductivity, and is hence known to be useful as a thermoelectric conversion material, and is being intensively studied. This substance is known to have several different kinds of crystal structure depending on synthetic conditions, and the synthetic conditions have been established together with various researches. This substance has a lamellar structure having a CoO₂ layer and a Na layer laminated alternately, and in this crystal structure, metal ions between CoO₂ layers can be inserted or eliminated by employing an electrochemical technique, and it can be used as an electrode active material for a battery, and in particular, by ion exchange of Na⁺ by Li⁺, it can be used as a positive electrode material for a lithium ion secondary battery.

On the other hand, since cobalt contained in the lamellar oxide NaCoO₂ is a rare and expensive metal, occupying the majority of raw material expenses, it seems beneficial both industrially and from the viewpoint of resources to replace it with other inexpensive transition metal such as manganese, iron or the like, but those reported heretofore are so small in replacement amount that those usage is unavoidably limited.

In a lithium ion secondary battery, at the time of charging or discharging, Li⁺ ion is inserted in or eliminated from the crystal of electrode active material. Therefore, the upper limit of output current density of battery is determined by the insertion and elimination speed of Li⁺ ion in the crystal, and the ion conductivity in the crystal. Besides, since ion diffusion in the crystal largely depends on the crystal structure of electrode, it is important for obtaining a stable battery characteristic that the crystal of the electrode active material is a single phase. On the other hand, when used as thermoelectric conversion material, the thermoelectric properties are known to vary significantly depending on the crystal phase, and establishment of lamellar oxide synthetic conditions of the single crystal phase has been requested.

Generally, these inorganic compounds are synthesized in a solid phase method, and the reaction at the time of sintering is considered to be promoted by mutual diffusion at contact points of raw material powder particles. Therefore, when such general oxide powder is used as a starting raw material, the larger the particle diameter of the raw material, that is, the smaller the specific surface area of the raw material, the smaller is the contact area of particles, and the time required for reaction becomes longer. To the contrary, if the particle diameter of the raw material is small, aggregation of raw material powder particles is likely to occur during the mixing operation, and however meticulous the mixing operation may be, it is difficult to obtain a uniform mixture. As a result, unreacted materials are mixed in the synthesized product, and it causes to lower the quality. In any cases, repeated grinding and sintering are required for synthesis, and when desired to obtain a substance of a large replacement amount, in particular, or if the reactivity of the material is low, the effect is prominent. When such grinding and sintering are repeated, the total time required for sintering is longer, and the influence of evaporation of an alkali metal cannot be ignored. As a result, the composition of the synthesized product is different from the mixing ratio at the time of mixing, and it is hard to obtain a stable quality.

As mentioned above, since NaCoO₂ has been intensively studied as a thermoelectric conversion material or a positive electrode active material for a lithium ion secondary battery, the relation between the synthetic conditions and the formation phase is known well. NaCoO₂ has a crystal structure of a CoO₂ layer and a Na layer laminated alternately, and this structure varies with the synthetic conditions such as sintering temperature and mixing ratio of raw materials. Comparing these different crystal structures, the atomic sequence of M and O of the MO₂ layer itself is the same, but overlaying of respective MO₂ layers slides somewhat in a direction parallel with the layers, and the sliding distance varies, so that different crystal structures are present. As a result, each crystal structure is formed of a periodic structure of several layers, and the number of layers differs in each crystal structure. At the same time, the sequence of oxide ions surrounding alkali ions is different. As a result, respective crystal structures are classified by the type of polyhedron [pillar (P), octahedron (O)] formed by oxide ions coordinated in an alkali metal, and the number of layers per unit lattice, and it is generally described as P2 or O3.

However, when cobalt of this substance is replaced with large amount of manganese, the replacement amount is so large that an unreacted transition metal oxide mingles in the synthesized product obtained by an ordinary method of synthesis, and it was difficult to synthesize a single phase. Therefore, the relationship between the synthetic conditions of the lamellar sodium-cobalt-manganese oxide and the formation phase has never been known so far.

An object of the present invention is to provide a lamellar sodium-cobalt-manganese oxide represented by the general formula NaₓCo_{y}Mn_{1-y}O₂ (where 0.6≦x≦0.8, 0.4≦y≦0.6) or NaₓCo_{y}Mn_{1-y}O₂ (where 0.8<x ≦1.0, 0.4≦y≦0.6)

Another object of the present invention is to provide a method for manufacturing with ease a lamellar sodium-cobalt-manganese oxide having a uniform composition and a single crystal structure.

Still another object of the present invention is to provide a method for manufacturing a lamellar sodium-cobalt-manganese oxide which is useful, for example, as a precursor of an electrode active material for a lithium ion secondary battery of 4.5 V class high voltage.

The present invention, in a first aspect, provides a lamellar sodium-cobalt-manganese oxide represented by the general formula NaₓCo_{y}Mn_{1-y}O₂ (where 0.6≦x≦0.8, 0.4≦y≦0.6) The present invention, in a second aspect, provides a lamellar sodium-cobalt-manganese oxide represented by the general formula NaₓCo_{y}Mn_{1-y}O₂ (where 0.8<x ≦1.0, 0.4≦y≦0.6)

The present invention, in a third aspect, provides a method for manufacturing a lamellar sodium-cobalt-manganese oxide which comprises the steps of:
mixing a sodium salt, a cobalt salt and a manganese salt in an aqueous solution state so as to be a molar ratio.of sodium, cobalt and manganese of x: y: 1-y (where 0.6 ≦x ≦0.8, 0.4 ≦y ≦0.6) and drying the obtained mixture,
sintering the obtained dried body in 'an oxygen-containing gas at 700 to 900 °C, and
quenching the sintered body from a temperature between 700 °C and 800 °C.

The present invention, in a fourth aspect, provides a method for manufacturing a lamellar sodium-cobalt-manganese oxide which comprises the steps of:
mixing a sodium salt, a cobalt salt and a manganese salt in an aqueous solution state so as to be a molar ratio of sodium, cobalt and manganese of x: y: 1-y (where 0.8<x ≦1.0, 0.4≦y ≦0.6) and drying the obtained mixture,
sintering the obtained dried body in an oxygen-containing gas at 800 to 900 °C, and
quenching the sintered body from a temperature between 800 °C and 900 °C.

The present invention, in a fifth aspect, provides the method for manufacturing a lamellar sodium-cobalt-manganese oxide as defined above, wherein the quenching speed is not less than 100 °C/hr.

The present invention, in a sixth aspect, provides the method for manufacturing a lamellar sodium-cobalt-manganese oxide as defined above, wherein the dried body is calcined previously in an oxygen-containing gas at 200 to 350 °C.

The present invention, in a seventh aspect, provides the method for manufacturing a lamellar sodium-cobalt-manganese oxide as defined above, wherein the dried body is sintered or calcined previously after having been compacted.

The invention is described in detail in connection with the drawings in which
Fig. 1 shows a crystal structure of a lamellar sodium-cobalt-manganese oxide (NaCo_{0.5}Mn_{0.5}O₂) obtained by the present invention;
Fig. 2 is an X-ray diffraction diagram of a lamellar sodium-cobalt-manganese oxide (NaCo_{0.5}Mn_{0.5}O₂) obtained by Examples of the present invention; and
Fig. 3 is a relation diagram of synthetic conditions and formation phase in Examples and Comparative Examples in the present invention.

The lamellar sodium-cobalt-manganese oxide of the present invention is obtained by a method in which, after a sodium salt, a cobalt salt and a manganese salt are mixed in an aqueous solution state so as to be a specific molar ratio and then dried, and the obtained dried body is sintered in an oxygen-containing gas and then quenched from the specific temperature range.

In the present invention, it is extremely important to use a water-soluble substance as a starting material, and mix the starting material in an aqueous solution state. Instead of such liquid phase method, if synthesized in an ordinary solid phase method, it is hard to obtain a uniform mixture, and unreacted raw materials mingle in the synthesized product and the quality is lowered. Hence, to obtain a substance of a large replacement amount., in particular, repeated sintering and grinding are required for synthesis. Further, if a high temperature sintering is required, an influence of evaporation of an alkali metal is remarkable, so that the synthesized product may be greatly different from the mixing ratio at the time of blending, and it is hard to obtain a stable quality. As compared with such solid phase method, selecting a water-soluble raw material as a starting material to be used as an aqueous solution, the dried body obtained by mixing in aqueous solution state and drying is extremely excellent in uniformity since each element holds a mixed state in the aqueous solution, and by sintering reaction of such dried body, the reaction is completed in a short time.

To obtain a single crystal phase, moreover, suitable mixing ratio of materials and sintering temperature are important. Further, in the substance having a large replacement amount as synthesized by the present invention, it is important to quench from a specific temperature when cooling after sintering. If cooled slowly in a furnace without quenching, the solid solution of elements in the crystal precipitates, and desired single crystal phase can not be obtained.

The sodium source used in the present invention preferably includes carbonates, acetates, nitrates, oxalates and hydroxides, which may be used either alone or in combination of two or more. The cobalt source and manganese source used in the present invention preferably include acetates, nitrates and oxalates, which may be used either alone or in combination of two or more. The concentration of an aqueous solution of a sodium salt, a cobalt salt, or a manganese salt of the raw materials, or an aqueous solution of a mixture of these salts is not particularly limited, however preferably, should be usually in a range of approximately 5 to 20 % by weight. If the aqueous solution concentration of the raw materials is lower than the above-described range, it takes a longer time in evaporation of moisture, so that the manufacturing efficiency is lowered, on the other hand, if higher than the above-described range, the raw materials are not dissolved sufficiently, so that a homogeneous mixed solution may not be obtained. To mix the sodium salt, the cobalt salt, and the manganese salt in aqueous solution state, either aqueous solutions of the sodium salt, the cobalt salt, and the manganese salt may be prepared individually and mixed at a specific metal molar ratio, or these salts may be prepared as a mixed aqueous solution containing them at a specific metal molar ratio.

In obtaining the lamellar sodium-cobalt-manganese oxide represented by the general formula NaₓCo_{y}Mn_{1-y}O₂ (where 0.6≦x ≦0.8, 0.4≦y≦0.6) of the present invention, after the sodium salt, the cobalt salt and the manganese salt are mixed in an aqueous solution state so as to be a molar ratio of sodium, cobalt and manganese of x: y: 1-y (where 0.6 ≦x ≦0.8, 0.4 ≦y ≦0.6) and then dried, and the obtained dried body is sintered in an oxygen-containing gas at 700 to 900 °C and then quenched from the temperature range between 700 °C and 800 °C. The molar ratio y of cobalt is preferably 0.45≦y ≦0.55, more preferably 0.48≦y ≦0.52.

If the synthetic conditions do not satisfy these requirements, a P3 single phase cannot be obtained. That is, if the molar ratio x of sodium is lower than the above-described ratio, a cobalt oxide is mixed in the P3 phase, and if the molar ratio x is higher than the above-described ratio, a P2 phase or a cobalt oxide is mixed in the P3 phase of the obtained crystal, and desired single phase is not obtained. If the molar ratio y of cobalt is lower than the above-described ratio, the solid solution of cobalt is insufficient and thus a cobalt oxide is mixed in the synthesized product, and if the molar ratio y of cobalt is higher than the above-described ratio, the object of the present invention is not attained satisfactorily. Further, if the sintering temperature is higher than the above-described range, it is not preferable since a P3 phase and a P2 phase are mixed in the obtained substance and sodium volatilizes. Further, if the sintering temperature is lower than the above-described range, the reaction is not terminated, and a cobalt oxide or a manganese oxide remains.

Moreover, if the starting temperature of quenching is higher than the above-described range, a P2 plase is mixed in the P3 phase, and if it is lower than the above-described range, a cobalt oxide or a manganese oxide is mixed in the p3 phase.

In obtaining the lamellar sodium-cobalt-manganese oxide represented by the general formula NaₓCo_{y}Mn_{1-y}O₂ (where 0.8<x ≦ 1.0, 0.4≦y≦0.6) of the present invention, after a sodium salt, a cobalt salt and a manganese salt are mixed in an aqueous solution state so as to be a molar ratio of sodium, cobalt and manganese of x: y: 1-y (where 0.8<x ≦1.0, 0.4≦y≦0.6) and then dried, the obtained dried body is sintered in an oxygen-containing gas at 800 to 900 °C, and then quenched from the temperature range between 800 °C and 900 °C. The molar ratio y of cobalt is preferably 0.45≦y≦0.55, more preferably 0.48 ≦y ≦0.52.

If the synthetic conditions do not satisfy these requirements, a P2 single phase cannot be obtained. That is, if the molar ratio x of sodium is lower than the above-described ratio, a P3 phase is mixed in the P2 phase, so that desired single phase is not obtained, or if the molar ratio x of sodium is higher than the above-described ratio, an excessive sodium compound is mixed in the obtained crystal, so that desired single phase is not obtained. If the molar ratio y of cobalt is lower than the above-described ratio, the solid solution of cobalt is insufficient and thus a cobalt oxide is mixed in the synthesized product, and if the molar ratio y of cobalt is higher than the above-described ratio, the object of the present invention is not attained satisfactorily. Further, if the sintering temperature and the starting temperature of quenching are higher than above-described range, sodium volatilizes to alter the composition of the synthesized product while a tremendous quantity of energy is required for manufacture. Further, if the sintering temperature and the starting temperature of quenching are lower than the above-described range, the P3 is mixed or the reaction is not terminated, and a cobalt oxide or a manganese oxide remains, so that desired P2 single phase cannot be obtained.

In any case described above, the drying method is not particularly limited, and includes a rotary evaporator and a spray dryer, besides ordinary drying methods. The dried body obtained comprises at least one selected from salts, oxides, complex oxides of sodium, cobalt and manganese and mixtures thereof. As the oxygen-containing gas, air is preferably used. In addition, the quenching speed is not less than 100 °C/hr, preferably not less than 300 °C/hr, more preferably not less than 500 °C/hr, most preferably not less than 700 °C/hr. If the quenching speed is slower than above-described speed, a low temperature phase precipitates in the crystal in the midst of quenching, so that desired single phase substance has a tendency not to be obtained. The upper limit of quenching speed is not particularly limited, but usually it is approximately 100,000 °C/hr from the viewpoint of operation. Quenching methods include quenching in liquid nitrogen or quenching in dry gas stream, however, are not particularly limited thereto.

Further, at the sintering reaction, the dried body (powder) may, if necessary, be previously compacted as a molded body prior to sintering. As compared with cases where the compaction is not performed, evaporation of sodium during sintering is suppressed, so that synthesized product of the desired composition becomes easy to be obtained. The compacting method is not particularly limited, and usually, a disk pelletizer, a roller compactor or the like may be used.

Prior to compacting, if necessary, it is preferable that the dried body is calcined for approximately 2 to 10 hours at approximately 200 to 350°C in the air to pyrolyze an acetate. This calcination provides particles with a high flowability to thus make easier the compacting treatment to be conducted later.

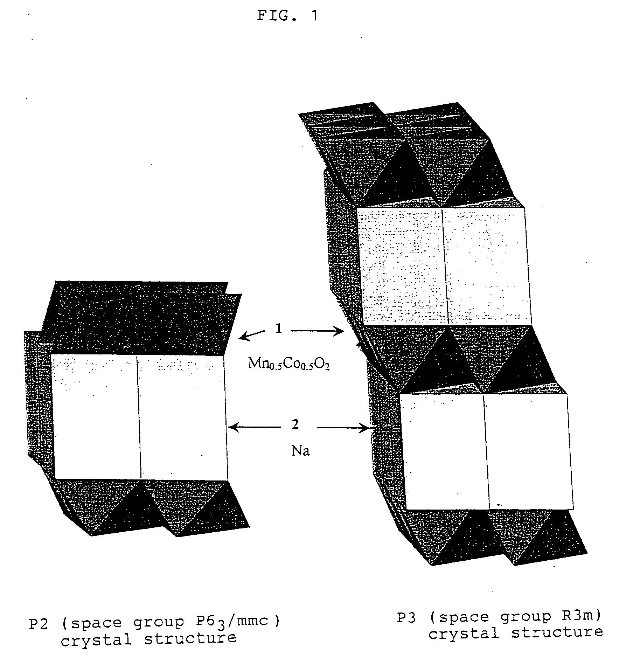

In this manner, a lamellar sodium-cobalt-manganese oxide represented by the general formula NaₓCo_{y}Mn_{1-y}O₂ (where 0.6≦x ≦0.8, 0.4≦y ≦0.6) or NaₓCo_{y}Mn_{1-y}O₂ (where 0.8<x ≦1.0, 0.4≦ y ≦0.6) is obtained. In the crystal structure expressed by a space group of P6₃/mmc obtained in the present invention, one period is formed by two MO₂ layers and six oxide ions coordinated in lithium ions between the layers form a triangular pillar (P2), and in the crystal structure expressed by a space group of R3m, the unit lattice includes three MO₂ layers, and six oxide ions coordinated in lithium ions between the layers form a triangular pillar (P3) (see Fig. 1). The lamellar sodium-cobalt-manganese oxide obtained in the present invention is useful, for example, as an electrode active material for a lithium ion secondary battery.

The present invention will be described in greater detail by referring to Examples, however, the present invention is not limited to only these Examples.

### Example 1

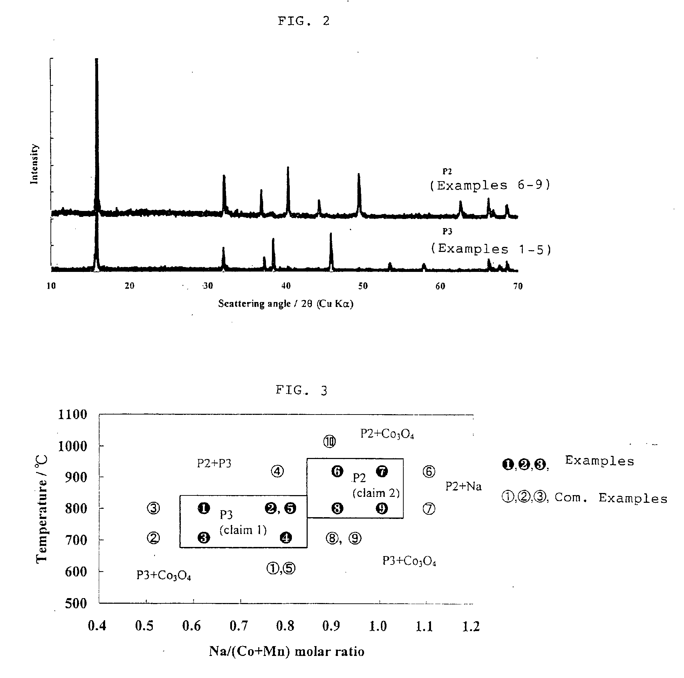

Sodium nitrate, cobalt acetate and manganese acetate were mixed in an aqueous solution at a molar ratio of Na/Co/Mn = 0.6/0.5/0.5, and evaporated and solidified by a rotary evaporator, and the obtained dried body was calcined previously for 3 hours at 300 °C in the air. Then, the calcined body was sintered in the air for 20 hours at 800 °C, and was quenched from this temperature to room temperature at 1100 °C/hr. The obtained sintered body was ground and the phase was identified by powder X-ray diffraction. The obtained phase was single, containing three layers of MO₂ per unit lattice and had a (P3 type) lamellar structure expressed by a space group of R3m in which oxide ions coordinated in Na formed a triangular pillar (see Fig. 2).

### Example 2

Sodium nitrate, cobalt acetate and manganese acetate were mixed in an aqueous solution at a molar ratio of Na/Co/Mn = 0.8/0.5/0.5, and evaporated and solidified by a rotary evaporator. Then, the dried body was sintered for 20 hours at 800 °C in the air and was quenched from this temperature to room temperature at 1100 °C/hr. The obtained sintered body was ground and the phase was identified by powder X-ray diffraction. The obtained phase was a single and had a P3 type lamellar structure.

### Example 3

Sodium nitrate, cobalt acetate and manganese acetate were mixed in an aqueous solution at a molar ratio of Na/Co/Mn = 0.6/0.5/0.5, and evaporated and solidified by a rotary evaporator, and the obtained dried body was calcined previously for 3 hours at 300 °C in the air and compacted by a disk pelletizer. Then, the compacted body was sintered for 40 hours at 700 °C in the air, and was quenched from this temperature to room temperature at 1000 °C/hr. The obtained sintered body was ground and the phase was identified by powder X-ray diffraction. The obtained phase was a single and had a P3 type lamellar structure.

### Example 4

Sodium nitrate, cobalt acetate and manganese acetate were mixed in an aqueous solution at a molar ratio of Na/Co/Mn = 0.8/0.5/0.5, and evaporated and solidified by a rotary evaporator, and the obtained dried body was compacted by a disk pelletizer. Then, the compacted body was sintered for 40 hours at 700 °C in the air and was quenched from this temperature to room temperature at 1000 °C/hr. The obtained sintered body was ground and the phase was identified by powder X-ray diffraction. The obtained phase was a single and had a P3 type lamellar structure.

### Example 5

Sodium nitrate, cobalt acetate and manganese acetate were mixed in an aqueous solution at a molar ratio of Na/Co/Mn = 0.8/0.5/0.5, and evaporated and solidified by a rotary evaporator, and the obtained dried body was calcined previously for 3 hours at 300 °C in the air and compacted by a disk pelletizer. Then, the compacted body was sintered for 10 hours at 900 °C in the air and was once cooled in the furnace to 800 °C, and then quenched to room temperature at 1100 °C/hr. The obtained sintered body was ground and the phase was identified by powder X-ray diffraction. The obtained phase was a single and had a P3 type lamellar structure.

### Comparative Example 1

Sodium nitrate, cobalt acetate and manganese acetate were mixed in an aqueous solution at a molar ratio of Na/Co/Mn = 0.8/0.5/0.5, and evaporated and solidified by a rotary evaporator, and the obtained dried body was calcined previously for 3 hours at 300 °C in the air and compacted by a disk pelletizer. Then, the compacted body was sintered for 60 hours at 600 °C in the air and was quenched from this temperature to room temperature at 860 °C/hr. The obtained sintered body was ground and the phase was identified by powder X-ray diffraction. The obtained phase was not a single but a P3 type lamellar structure mixed with Co₃O₄.

### Comparative Example 2

Sodium nitrate, cobalt acetate and manganese acetate were mixed in an aqueous solution at a molar ratio of Na/Co/Mn = 0.5/0.5/0.5, and evaporated and solidified by a rotary evaporator, and the obtained dried body was calcined previously for 3 hours at 300 °C in the air and compacted by a disk pelletizer. Then, the compacted body was sintered for 40 hours at 700 °C in the air and was quenched from this temperature to room temperature at 1000 °C/hr. The obtained sintered body was ground and the phase was identified by powder X-ray diffraction. The obtained phase was not a single but a P3 type lamellar structure mixed with Co₃O₄.

### Comparative Example 3

Sodium nitrate, cobalt acetate and manganese acetate were mixed in an aqueous solution at a molar ratio of Na/Co/Mn = 0.5/0.5/0.5, and evaporated and solidified by a rotary evaporator, and the obtained dried body was calcined previously for 3 hours at 300 °C in the air and compacted by a disk pelletizer. Then, the compacted body was sintered baked for 20 hours at 800 °C in the air and was quenched from this temperature to room temperature at 1100 °C/hr. The obtained sintered body was ground and the phase was identified by powder X-ray diffraction. The obtained phase was not a single but a P3 type lamellar structure mixed with Co₃O₄.

### Comparative Example 4

Sodium nitrate, cobalt acetate and manganese acetate were mixed in an aqueous solution at a molar ratio of Na/Co/Mn = 0.8/0.5/0.5, and evaporated and solidified by a rotary evaporator, and the obtained dried body was calcined previously for 3 hours at 300 °C in the air and compacted by a disk pelletizer. Then, the compacted body was sintered for 10 hours at 900 °C in the air and was quenched to room temperature at 1300 °C/hr. The obtained sintered body was ground and the phase was identified by powder X-ray diffraction. The obtained phase was not a single but a P2 and P3 type mixed phase.

### Comparative Example 5

Sodium nitrate, cobalt acetate and manganese acetate were mixed in an aqueous solution at a molar ratio of Na/Co/Mn = 0.8/0.5/0.5, and evaporated and solidified by a rotary evaporator, and the obtained dried body was calcined previously for 3 hours at 300 °C in the air and compacted by a disk pelletizer. Then, the compacted body was sintered for 40 hours at 700 °C in the air and was once cooled in the furnace to 600 °C, and then quenched to room temperature at 860 °C/hr. The obtained sintered body was ground and the phase was identified by powder X-ray diffraction. The obtained phase was not a single but a P3 type lamellar structure mixed with Co₃O₄.

**Table 1**

| | Molar ratio Na/Mn/Co | Sintering | | Quenching | | Product |
|---|---|---|---|---|---|---|
| | | Temp. °C | Time hr | Start temp. °C | Speed °C/hr | |
| Example 1 | 0.6/0.5 /0.5 | 800 | 20 | 800 | 1100 | P3 |
| Example 2 | 0.8/0.5 /0.5 | 800 | 20 | 800 | 1100 | P3 |
| Example 3 | 0.6/0.5 /0.5 | 700 | 40 | 700 | 1000 | P3 |
| Example 4 | 0.8/0.5 /0.5 | 700 | 40 | 700 | 1000 | P3 |
| Example 5 | 0.8/0.5/0.5 | 900 | 10 | 800 (Cooled from 900°C to 800°C in the furnace) | 1100 | P3 |
| Comp. Ex. 1 | 0.8/0.5 /0.5 | 600 | 60 | 600 | 860 | P3+Co3O4 |
| Comp. Ex. 2 | 0.5/0.5 /0.5 | 700 | 40 | 700 | 1000 | P3+Co3O4 |
| Comp. Ex. 3 | 0.5/0.5 /0.5 | 800 | 20 | 800 | 1100 | P3+Co3O4 |
| Comp. Ex. 4 | 0.8/0.5 /0.5 | 900 | 10 | 900 | 1300 | P2+P3 |
| Comp. Ex. 5 | 0.8/0.5 /0.5 | 700 | 40 | 600 (Cooled from 700°C to 600°C in the furnace) | 860 | P3+Co3O4 |

### Example 6

Sodium nitrate, cobalt acetate and manganese acetate were mixed in an aqueous solution at a molar ratio of Na/Co/Mn = 0.9/0.5/0.5, and evaporated and solidified by a rotary evaporator, and the obtained dried body was calcined previously for 3 hours at 300 °C in the air and compacted by a disk pelletizer. Then, the compacted body was sintered for 10 hours at 900 °C in the air and was quenched from this temperature to room temperature at 1300 °C/hr. The obtained sintered body was ground and the phase was identified by powder X-ray diffraction. The obtained phase was a single phase including two MO₂ layers per unit lattice in which oxide ions coordinated in Na formed a triangular pillar, had a P2 type lamellar structure expressed by a space group of P6₃/mmc (Fig. 2).

### Example 7

Sodium nitrate, cobalt acetate and manganese acetate were mixed in an aqueous solution at a molar ratio of Na/Co/Mn = 1.0/0.5/0.5, and evaporated and solidified by a rotary evaporator, and the obtained dried body was calcined previously for 3 hours at 300 °C in the air and compacted by a diskpelletizer. Then, the compacted body was sintered for 10 hours at 900 °C in the air and was quenched from this temperature to room temperature at 1300 °C/hr. The obtained sintered body was ground and the phase was identified by powder X-ray diffraction. The obtained phase was a single and had a P2 type lamellar structure.

### Example 8

Sodium nitrate, cobalt acetate and manganese acetate were mixed in an aqueous solution at a molar ratio of Na/Co/Mn = 0.9/0.5/0.5, and evaporated and solidified by a rotary evaporator, and the obtained dried body was calcined previously for 3 hours at 300 °C in the air and compacted by a disk pelletizer. Then, the compacted body was sintered for 20 hours at 800 °C in the air and was quenched from this temperature to room temperature at 1100 °C/hr. The obtained sintered body was ground and the phase was identified by powder X-ray diffraction. The obtained phase was a single and had a P2 type lamellar structure.

### Example 9

Sodium nitrate, cobalt acetate and manganese acetate were mixed in an aqueous solution at a molar ratio of Na/Co/Mn = 1.0/0.5/0.5, and evaporated and solidified by a rotary evaporator, and the obtained dried body was calcined previously for 3 hours at 300 °C in the air and compacted by a disk pelletizer. Then, the compacted body was sintered for 20 hours at 800 °C in the air and was quenched from this temperature to room temperature at 1100 °C/hr. The obtained sintered body was ground and the phase was identified by powder X-ray diffraction. The obtained phase was a single and had a P2 type lamellar structure.

### Comparative Example 6

Sodium nitrate, cobalt acetate and manganese acetate were mixed in an aqueous solution at a molar ratio of Na/Co/Mn = 1.1/0.5/0.5, and evaporated and solidified by a rotary evaporator, and the obtained dried body was calcined previously for 3 hours at 300 °C in the air and compacted by a disk pelletizer. Then, the compacted body was sintered for 10 hours at 900 °C in the air and was quenched from this temperature to room temperature at 1300 °C/hr. The obtained sintered body was ground and the phase was identified by powder X-ray diffraction. The obtained phase was not a single but a P2 type lamellar structure mixed with an excessive sodium compound.

### Comparative Example 7

Sodium nitrate, cobalt acetate and manganese acetate were mixed in an aqueous solution at a molar ratio of Na/Co/Mn = 1.1/0.5/0.5, and evaporated and solidified by a rotary evaporator, and the obtained dried body was calcined previously for 3 hours at 300 °C in the air and compacted by a disk pelletizer. Then, the compacted body was sintered for 20 hours at 800 °C in the air and was quenched from this temperature to room temperature at 1100 °C/hr. The obtained sintered body was ground and the phase was identified by powder X-ray diffraction. The obtained phase was not a single but a P2 type lamellar structure mixed with an excessive sodium compound.

### Comparative Example 8

Sodium nitrate, cobalt acetate and manganese acetate were mixed in an aqueous solution at a molar ratio of Na/Co/Mn = 0.9/0.5/0.5, and evaporated and solidified by a rotary evaporator, and the obtained dried body was calcined previously for 3 hours at 300 °C in the air and compacted by a disk pelletizer. Then, the compacted body was sintered baked for 40 hours at 700 °C in the air and was quenched from this temperature to room temperature at 1000 °C/hr. The obtained sintered body was ground and the phase was identified by powder X-ray diffraction. The obtained phase was not single but a mixed phase of a P3 type lamellar structure and Co₃O₄.

### Comparative Example 9

Sodium nitrate, cobalt acetate and manganese acetate were mixed in an aqueous solution at a molar ratio of Na/Co/Mn = 0.9/0.5/0.5, and evaporated and solidified by a rotary evaporator, and the obtained dried body was calcined previously for 3 hours at 300 °C in the air and compacted by a disk pelletizer. Then, the compacted body was sintered for 20 hours at 800 °C in the air and was once cooled in the furnace to 700 °C and then quenched to room temperature at 1000 °C/hr. The obtained sintered body was ground and the phase was identified by powder X-ray diffraction. The obtained phase was not a single but a mixed phase of a P3 type lamellar structure and Co₃O₄.

### Comparative Example 10

Sodium nitrate, cobalt acetate and manganese acetate were mixed in an aqueous solution at a molar ratio of Na/Co/Mn = 0.9/0.5/0.5, and evaporated and solidified by a rotary evaporator, and the obtained dried body was calcined previously for 3 hours at 300 °C in the air and compacted by a disk pelletizer. Then, the compacted body was sintered for 10 hours at 1000 °C in the air and was quenched from this temperature to room temperature at 1400 °C/hr. The obtained sintered body was ground and the phase was identified by powder X-ray diffraction. The obtained phase was not a single but a mixed phase of a P2 type lamellar structure and Co₃O₄.

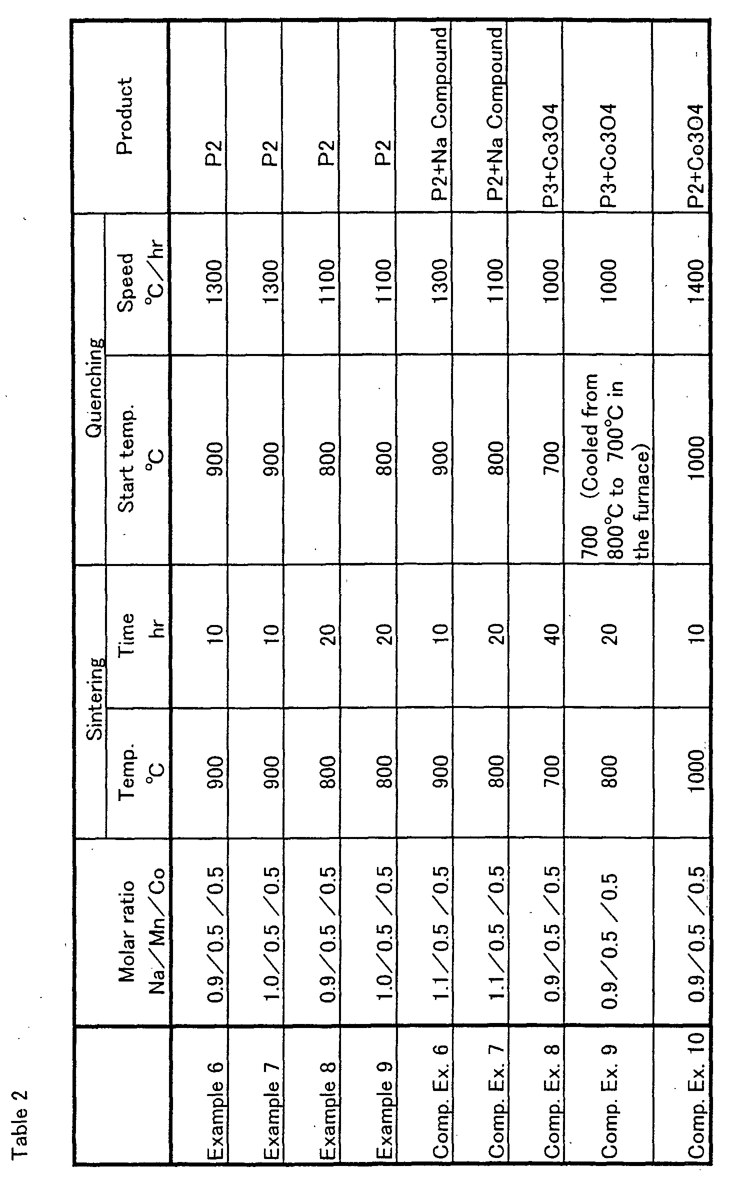

In these Examples 1 to 9 and Comparative Examples 1 to 10, the relation between the synthetic conditions and the formation phase is summed up in Fig. 3.

As described above, in an ordinary solid phase method, when synthesizing a lamellar sodium-cobalt-manganese oxide, it is extremely difficult to replace cobalt and manganese at a rate in the neighborhood of 1:1, and residue of transition metal oxide in the object material obtained after sintering is not avoided. However, according to the method of the present invention, by mixing materials in a solution state, the mixing state of elements is enhanced, and a single phase of a uniform composition not containing impurities is obtained.

Further, by selecting the molar ratio of sodium, manganese and cobalt, the sintering temperature and the quenching temperature, it is possible to manufacture a lamellar sodium-cobalt-manganese oxide of P3 phase (space group R3m) and P2 phase (space group P6₃/mmc).

The lamellar sodium-cobalt-manganese oxide of the present invention is large in replacement amount and has a uniform composition and single crystal structure, which is useful, for example, as a precursor of an electrode active material for a lithium in secondary battery of 4.5 V class high voltage.

## Claims

1. A lamellar sodium-cobalt-manganese oxide represented by the general formula NaₓCo_{y}Mn_{1-y}O₂ (where 0.6≦x ≦0.8, 0.4≦y ≦0.6)

2. A lamellar sodium-cobalt-manganese oxide represented by the general formula NaₓCo_{y}Mn_{1-y}O₂ (where 0.8<x ≦ 1.0, 0.4≦y ≦0.6)

3. A method for manufacturing a lamellar sodium-cobalt-manganese oxide which comprises the steps of:
mixing a sodium salt, a cobalt salt and a manganese salt in an aqueous solution state so as to be a molar ratio of sodium, cobalt and manganese of x: y: 1-y (where 0.6 ≦x≦0.8, 0.4 ≦y ≦0.6) and drying the obtained mixture,
sintering the obtained dried body in an oxygen-containing gas at 700 to 900 °C, and
quenching the sintered body from a temperature between 700 °C and 800 °C.

4. A method for manufacturing a lamellar sodium-cobalt-manganese oxide which comprises the steps of:
mixing a sodium salt, a cobalt salt and a manganese salt in an aqueous solution state so as to be a molar ratio of sodium, cobalt and manganese of x: y: 1-y (where 0.8<x ≦1.0, 0.4≦y ≦0.6) and drying the obtained mixture,
sintering the obtained dried body in an oxygen-containing gas at 800 to 900 °C, and
quenching the sintered body from a temperature between 800 °C and 900 °C.

5. The method for manufacturing a lamellar sodium-cobalt-manganese oxide according to claim 3 or 4, wherein the quenching speed is not less than 100 °C/hr.

6. The method for manufacturing a lamellar sodium-cobalt-manganese oxide according to any one of claims 3 to 5, wherein the dried body is calcined previously in an oxygen-containing gas at 200 to 350 °C.

7. The method for manufacturing a lamellar sodium-cobalt-manganese oxide according to any one of claims 3 to 6, wherein the dried body is sintered or calcined previously after having been compacted.
